# EUROPEAN PATENT APPLICATION

(11) **EP 3 978 334 A1**
(43) Date of publication of application: **06.04.2022**
(21) Application number: 19930468.4
(22) Date of filing: 22.08.2019
(51) Int. Cl.: B62D 23/00, B62J 1/02, B60R 21/16, B60R 22/26

(54) **SAFE MOTORBIKE**

(30) Priority: 24.05.2019 CO 19005437
(71) Applicant: Centro de Innovación Para Motociclistas Tech4riders S.A.S., Bogotá, D.C. (CO)
(72) Inventor: ACEVEDO ORDUÑA, German Leonardo, Bogotá, D.C. (CO)
(74) Representative: ZBM Patents - Zea, Barlocci & Markvardsen
(86) International application number: PCT/IB2019/057093
(87) International publication number: WO 2020/240273

(57) **Abstract**

The present invention relates to a three-wheel monocoque motorbike-type vehicle designed to increase the survival of persons (users or pedestrians) in the event of an accident. The vehicle is characterised by its inverted-tricycle configuration and is provided with: a monocoque chassis (1) to protect the users from injury in the event of accidents; safety seats provided with retaining systems (8) and mechanical detachment (9) from the chassis of the vehicle to prevent the direct transmission of energy from collisions; and systems for absorbing the energy of impact in order to protect the users (4, 5, 6) and pedestrians (7)

## Description

### Field of Invention

This invention is aimed at the field of safety of three-wheeled monocoque motorcycle vehicles by means of the conjunction of passive and active safety systems.

### Object of the Invention

This invention improves the safety of users of three-wheeled motorcycle vehicles, by means of the conjunction of a monocoque chassis and impact energy retention and absorption systems.

### Background of the Invention

The first concept of a three-wheeled motorcycle vehicle offering a detachable cabin-type cockpit was presented in patent FR2534860 which was granted in 1989. This patent featured a vehicle in tricycle configuration with a front wheel and two rear wheels, and had the possibility of offering a detachable cabin-type cockpit, which provided protection against environmental factors such as water, dust or light but did not provide any ability to absorb impact energy.

Another concept similar to the above was presented in 1987 in patent FR2600611, in which the cabin, unlike the previous one, was box-shaped and suspended in conjunction with the seat. The same concept of rain protection was presented in patent FR2614260. Patent EP0876263, granted in 1998, features a three-wheeled vehicle (two rear and one front) with a closed cabin and three doors: two side doors and one rear door for loading.

Patent FR2770820, granted in 1999, features a three-wheeled vehicle (one front wheel and two rear wheels) built by tubular structures that aim to generate a structure surrounding the vehicle users.

Three-wheeled vehicles with a rear wheel and two front wheels are known since US Patent Nos. 4,020,914, issued to Wolfgang Trautwein in 1977; 4,448,278, granted to William J. Badsey in 1984; 4,787,470, granted to William J. Badsey in 1988, each of which describes vehicles in a reverse trike configuration. Similarly, patent AU 1993041692, granted in 1995, features a three-wheeled vehicle concept in a reverse trike configuration which can be used in cars or motorcycles.

Patent FR2821051, granted in 2002, features a freight transport device, which can be adapted to three-wheeled motor vehicles.

Patent FR2833522, granted in 2004 to Peugeot Motorcycles, features a three-wheeled cabin vehicle in a reverse trike configuration, claiming control systems and the way of connecting the wheels to the frame without any reference to the safety of the occupants. Patent FR2834961 features a vehicle in a reverse trike configuration with a cabin divided into two parts, a fixed one in the rear and a detachable one at the front to allow access to the vehicle. Likewise, it features a seat with a retention system and a damping system, however, it does not have any impact energy absorption system.

Patent WO2011061768 features a three-wheeled cabin vehicle in reverse trike configuration, mainly claiming properties on the vehicle's control steering system without any reference to impact energy absorption systems or occupant safety systems.

Patent WO2011121211 features a tricycle-type cabin vehicle characterized by a cargo compartment which is decoupled from the user's cabin. Patent CN102602456 features a vehicle in tricycle configuration with a spherical cabin-shaped structure divided into two cockpits, one front and one rear, but does not have any impact energy absorption system. Patent EP2505422 features a cabin vehicle in a tricycle configuration, one front wheel and two rear wheels, characterized mainly by being of electric propulsion and having a cargo compartment at the back. Very similar to the above, Patent EP2574531 features a tricycle-type cabin vehicle but for a single occupant and without cargo compartment. Patent WO2016023689 features a cabin vehicle for one passenger, with reverse trike configuration, but does not refer to any protection system. US20170021889 patent granted to Arcimoto features a two-user cabin vehicle, but it also does not have an impact energy retention or absorption system.

Patent US20180237094 features a modular vehicle in a reverse trike configuration in which the cabin can be removed by segments, but it also does not refer to clamping systems or protective items.

According to the above, the vehicles disclosed in the prior art above do not take into account the joint use of cabin vehicles in a reverse trike configuration with impact energy absorption systems, occupant retention systems and the integration of active airbag impact energy absorption systems. This prior art is characterized by using tricycle-type configurations or having cabin systems, but not a combination of such configuration, in conjunction with a chassis forming a protective cabin and integrating impact energy absorption items or a seat system with a user retention mechanism and airbag protections.

In view of the above, the need to develop a system that provides a higher safety level for the occupants of three-wheeled vehicles persisted in the state of the art.

### Description of the Figures

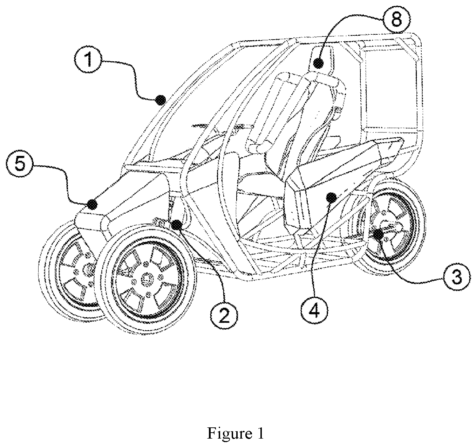

***Figure 1******.*** Safe bike perspective view. The figure shows the different components of the system such as the monocoque chassis (1), front suspension (2), rear suspension (3), passive side-impact energy absorption systems (4), passive front-impact energy absorption system (5), and seat with retention system (8).

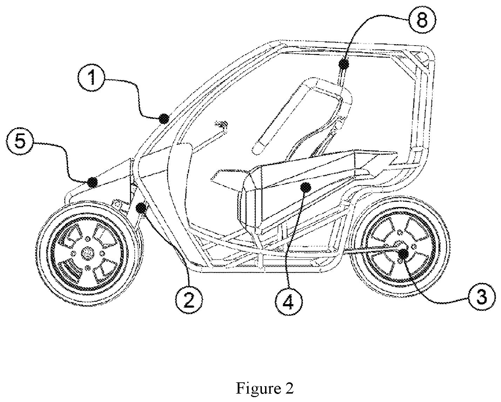

***Figure 2******.*** Safe bike side view. The figure shows the different components of the system such as the monocoque chassis (1), front suspension (2), rear suspension (3), passive side-impact energy absorption systems (4), passive front-impact energy absorption system (5), and seat with retention system (8).

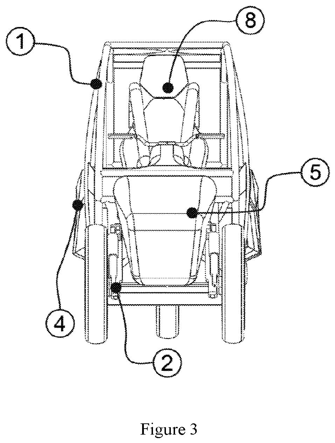

***Figure 3******.*** Safe bike front view. The figure shows the different components of the system such as the monocoque chassis (1), front suspension (2), passive side-impact energy absorption systems (4), passive front-impact energy absorption system (5), and seat with retention system (8).

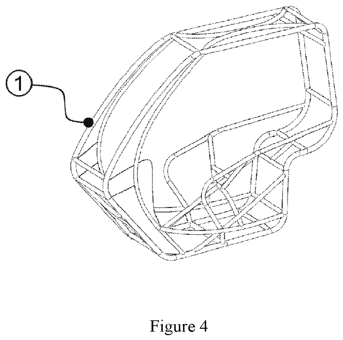

***Figure 4******.*** Monocoque chassis. Isometric illustration of the monocoque chassis (1), where the structural reinforcements of the system are displayed.

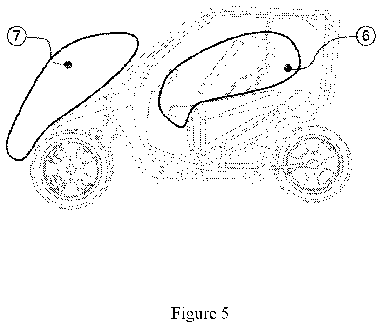

***Figure 5******.*** Curtain and frontal airbag systems. Side view of the vehicle highlighting the activation of the curtain airbag systems for side-impact protection (6) and the frontal airbag system for pedestrian protection (7) in case of collision.

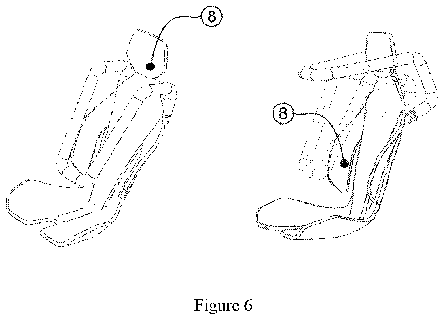

***Figure 6******.*** Seat with retention system. Isometric view of the seat with the retention system (8) roller coaster type, closed and open.

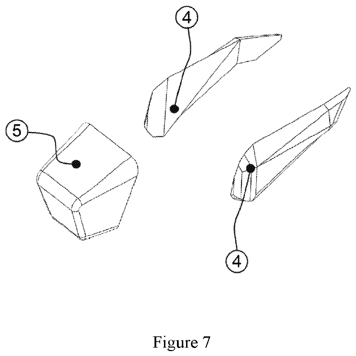

***Figure* 7****.** Impact energy absorption systems. Exploded view of passive side-impact energy absorption systems (4), and front impact energy absorption system (5)

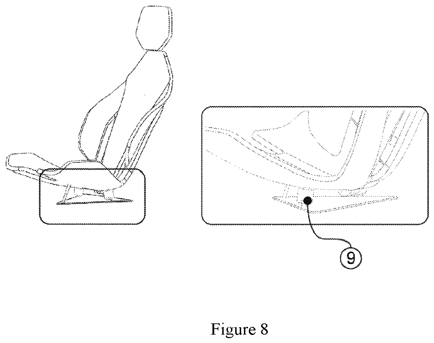

***Figure 8******.*** Mechanical decoupling system of the seat to the chassis (9). Isometric and detail view of the mechanical decoupling system that prevents the direct transmission of energy from the chassis to the user in the event of a collision.

### Detailed Description of the Invention

Injuries caused by traffic accidents are a major but neglected public health problem. Of all the systems that people have to deal with every day, traffic systems are the most complex and dangerous. It is estimated that on average more than one million three hundred thousand people die worldwide each year from traffic accidents. Approximately 85% of these deaths are concentrated in low- and middle-income countries. According to World Health Organization data, the death risk for users of two-wheeled motor vehicles is twenty times higher than that of car occupants. Once the accident occurs, the probability of a fatal or serious accident is more than three times for motorcycle users with respect to users of tourist-type vehicles.

According to the largest motor accidentality study (MAIDS), which was developed in Europe, and in which interurban accidents were analyzed, with a sample of more than 1,000 patients. The recorded pattern of injuries shows that motorists are largely exposed to the risk of injury in the area of the head, thorax, and arms and legs in the event of an accident. When studying only collisions, it becomes clear that the pattern of injuries depends on the characteristics of the accident. Analyzing only trauma in very serious and fatal accidents, we can see how the most frequent ones are those affecting the Head, with 27% of cases, followed by those affecting the Thorax with 21%, and those affecting the Legs with 20%, the rest of the trauma occur, by order of relevance, in Abdomen, Arms, Neck, Spine and Pelvis. The analysis recorded 2,561 traumas in 1,060 patients, meaning that in a motorcycle accident there is an average of 2.4 different traumas in each patient.

It is important to highlight that the energy involved in the event determines the severity level of the injuries and the affected parts of the body. Statistics show that in low-energy events, it is highly common to find injuries in upper and lower limbs without compromising the vital organs of the motorized person, but on the contrary, in medium- or high-energy events, the patient's survival is compromised as there are injuries compromising the areas that house the vital organs such as the head, neck, thorax and abdomen.

ISO 13232 allows identifying the typical dynamics of a motorcycle accident, in which three phases are clearly distinguished:
1.- Primary Impact Phase: This phase takes approx. 250 milliseconds (ms), and comprises three stages: First contact of the front rim of the bike with the vehicle. This stage usually ranges from 0 ms to 50 ms. Forward movement of the motorcyclist, the pelvis slides over the gas tank, the legs are stretched and the upper body rises and advances. This stage ranges from 50 to 150 ms, and primary impact of the motorcyclist's head and thorax against the vehicle, the cervical vertebrae are overloaded by the rotational energy of the head. This stage ranges from 150 ms to 250 ms.
2.- Flight Phase: This phase takes approx. 600 ms after the primary impact (250 ms), and thanks to the pitch effect of the motorcycle and inertia, the motorcyclist is ejected above the vehicle and flies until touching the ground again.
3.- Secondary Impact Phase: This phase begins approximately 860 ms after the start of the accident, when the motorcyclist hits the ground after the flight phase, usually causing large traumas in vital areas such as the thorax, neck and head.

The invention is related to a monocoque vehicle, i.e., a vehicle where both the chassis and the cabin are composed of a single piece. The vehicle is characterized by being of a three-wheeled motorcycle type, and aims to preserve the life and physical integrity of people (users and pedestrians) in case of accident. The vehicle can be used by one or two occupants and can be motorized by both an electric motor and an internal combustion engine. The reverse trike configuration, i.e., two wheels in the front and one wheel at the back, provides stability in both static and dynamic state, which allows the occupants to keep their legs inside the cabin and not expose them to severe traumas in the event of side collisions or overturning.

The monocoque chassis (1) provides protection to the vehicle occupants in the event of collision or overturning, and has structural reinforcements that prevent the deformation of the cabin so as not to expose the occupants to high-energy impacts. The cabin is an enclosed space and limited to the interior of the vehicle that is intended to be occupied by the driver or his companion and its mission is to provide protection to the vehicle users and prevent their expulsion in an accident.

This vehicle combines different types of safety technologies in order to maximize the probability of survival of its occupants and pedestrians in case of accidents. The invention is characterized by integrating passive or inherent impact energy absorption systems (4) and (5), impact absorption systems by frontal airbags (7) and/or curtain airbags (6), as well as seat belt or roller coaster-type occupant retention systems (8).

Impact energy absorption systems, also known as impact attenuator or kinetic energy absorption systems, are systems designed to protect the vehicle occupants from collisions.

Passive or inherent impact energy systems are located on the sides (4) and front of the vehicle (5) allowing the monocoque chassis not to receive direct impacts in the event of collision or overturning, but the kinetic energy of impacts is primarily absorbed by the passive energy absorption systems. Such passive systems (4) and (5) may be composed of one or more materials with inherent energy absorption capacities and the shapes and sizes of such systems may vary according to the exterior design of the vehicle cowl. They also provide protection to the vehicle occupant by preventing occupants from being injured by impacts with the vehicle chassis.

The vehicle has airbag technology energy absorption systems distributed as follows: a front airbag impact energy absorption system (7), which reduces the severity of pedestrian injuries in the event of run over and side curtain (6) airbag impact energy absorption systems for occupant protection. Air bag protection systems can be activated mechanically or electronically, and can be inflated by gas accumulator, pyrotechnic gas generator or a hybrid gas accumulator system with pyrotechnic activation. The shapes and sizes of the airbag systems may vary based on the exterior design of the vehicle or the activation system thereof.

The seats have roller coaster (8) or seat belt retention systems that prevent the vehicle occupants from being ejected in case of collision or overturning, keeping them safe inside the cabin. Likewise, the seats have a mechanical decoupling system (9) of the chassis that prevents the direct transmission of impact energy from the vehicle chassis to the occupants, thus reducing the possibility of trauma by mechanical transmission of energy. The decoupling system acts as a cushion or mechanical insulation between the seat and the monocoque chassis and can be by elastic, pneumatic or hydraulic compensators.

### List of parts:

- 1.: Monocoque chassis
- 2.: Front suspension
- 3.: Rear suspension
- 4.: Passive side-impact energy absorption system
- 5.: Passive front-impact energy absorption system
- 6.: Curtain airbag systems for side-impact protection
- 7.: Frontal airbag system for pedestrian protection
- 8.: Seat with retention system
- 9.: Decoupling system of the seat to the chassis

## Claims

1. A motorcycle monocoque vehicle **characterized by** a reverse trike configuration and is composed of a monocoque chassis, where both the chassis and the cabin are composed of a single piece (1), which has one or more active and passive impact energy absorption systems (4) (5) (6) (7), and one or two seats with occupant retention systems (8), mechanically decoupled (9) from the chassis.

2. Motorcycle monocoque vehicle according to claim 1, **characterized by** being composed of a monocoque chassis-type metal structure where both the chassis and the cabin are composed of a single piece (1), which has reinforcements throughout its structure to prevent deformations affecting the cabin in the event of collision or overturning.

3. Motorcycle monocoque vehicle according to claim 1, **characterized by** having one or more passive impact energy absorption systems on both the front (5) and back and sides (4). Such impact energy absorption systems are in turn composed of one or more layers of materials with inherent impact energy absorption capacity.

4. Motorcycle monocoque vehicle according to claim 1, **characterized by** having one or two seats with retention system (8) which are mechanically decoupled from the chassis by elastic couplings (9), each seat has a clamping or retention system that can be of the seat belt type or roller coaster type.

5. Motorcycle monocoque vehicle according to claim 1, **characterized by** having a frontal airbag impact energy absorption system (7), which reduces the severity of pedestrian injuries in case of run over and side curtain (6) airbag impact absorption systems for occupant protection.
